Europäisches Patentamt

European Patent Office

Office européen des brevets

(19)

(11) Numéro de publication : **0 035 941**
**B1**

(12) # FASCICULE DE BREVET EUROPÉEN

(45) Date de publication du fascicule du brevet :
**10.02.88**

(51) Int. Cl.⁴ : **C 03 B 18/22**

(21) Numéro de dépôt : **81400349.7**

(22) Date de dépôt : **06.03.81**

(54) Refroidisseurs pour le flottage du verre.

(30) Priorité : **08.03.80 DE 3008960**

(43) Date de publication de la demande :
**16.09.81 Bulletin 81/37**

(45) Mention de la délivrance du brevet :
**10.02.88 Bulletin 88/06**

(84) Etats contractants désignés :
**BE DE FR IT LU NL SE**

(56) Documents cités :
**DE-A- 2 333 695**
**FR-A- 1 496 498**
**FR-A- 1 604 875**
**FR-A- 2 014 238**

(73) Titulaire : **SAINT-GOBAIN VITRAGE**
**Les Miroirs 18, avenue d'Alsace**
**F-92400 Courbevoie (FR)**
**BE FR IT LU NL SE**
**VEGLA Vereinigte Glaswerke GmbH**
**Viktoriaallee 3-5**
**D-5100 Aachen (DE)**
**DE**

(72) Inventeur : **Liepelt, Eberhard**
**Schütsheide 29**
**D-5190 Stolberg-Breinig (DE)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

EP 0 035 941 B1

## Description

L'invention a pour objet des refroidisseurs destinés à une installation de flottage du verre, et constitués d'une tubulure traversée par un fluide réfrigérant, qui s'étend transversalement au-dessus du ruban de verre flottant sur le bain de métal en fusion et est équipée d'une couche d'isolation thermique au voisinage des parois du four.

Les refroidisseurs de fours de flottage connus sont des enceintes de dimensions fixes parcourues par un liquide refroidisseur, placées en position médiane au-dessus du bain métallique et alimentées depuis l'extérieur à travers les parois latérales, des tubes parcourus par ce liquide et traversant le bain métallique dans sa largeur, d'une paroi latérale à l'autre, ou encore des tubes doubles pénétrant dans le four, au-dessus du bain métallique, à partir de l'une des parois, sur l'un des côtés ou sur chacun d'eux, comme on peut le voir dans le brevet DE PS 1 596 430.

Les refroidisseurs, en principe, ont pour fonction de refroidir le ruban de verre exclusivement ou principalement dans sa partie médiane. En effet, les pertes qui se produisent par les parois font régner dans l'axe du four une température supérieure à celle observée le long de ces parois. Mais pour former un ruban uniforme, il est nécessaire d'éviter les écarts de température transversaux : c'est normalement l'usage de ces refroidisseurs.

Comme les refroidisseurs eux-mêmes ou du moins leurs canalisations d'alimentation passent nécessairement au-dessus des bords du ruban de verre, dans une région que l'on ne désire absolument pas refroidir, ils sont en règle générale revêtus à cet endroit d'une couche isolante, par exemple une couche d'amiante fixée à leur surface.

Il s'est révélé que l'utilisation de tels refroidisseurs à couche isolante fixe pouvait gêner dans certains cas la mise en œuvre du procédé. Par exemple, lorsque l'on modifie la largeur du ruban de verre fabriqué, il peut se faire que la zone couverte par la couche isolante devienne trop courte ou trop longue. Ou encore, lorsque les refroidisseurs pénètrent dans le four de flottage à partir de l'une des parois latérales, il peut être nécessaire de les engager plus profondément ou au contraire de les reculer quelque peu. Dans un tel cas, la zone de transition entre la région refroidie et la région isolée se déplace elle aussi, ce qui peut avoir des conséquences secondaires nuisibles.

La publication du brevet FR-A-2 014 238 décrit un refroidisseur équipé d'une tubulure de refroidissement fixe traversant le four de flottage de part en part. Sur la tubulure sont prévus des manchons isolants capables de coulisser, étant actionnés par un dispositif annexe traversant une paroi latérale du four. La fixité du refroidisseur limite son efficacité et sa souplesse d'utilisation.

La publication du brevet FR-A-1 604 875, servant de base pour le préambule de la revendication 1, décrit des organes refroidisseurs formés d'éléments ou de tubulures pénétrant dans le four à partir d'une seule paroi latérale. Il est prévu que ces refroidisseurs puissent être munis de couches isolantes uniquement sur leur face supérieure afin d'élever la température de ces faces supérieures. Il n'est pas prévu dans ce document d'utiliser des couches isolantes pour intervenir sur le profil de température transversal du ruban de verre.

L'invention a pour objet de remédier aux inconvénients cités et de transformer les refroidisseurs de l'art antérieur, de façon que la position de la zone de transition puisse être modifiée seule, sans qu'il y ait à transformer l'ensemble du refroidisseur et indépendamment de sa position.

Selon l'invention le refroidisseur constitué d'une tubulure qui pénètre dans le four de flottage à partir d'une seule paroi latérale, traversée par un fluide réfrigérant, qui s'étend transversalement au-dessus du ruban de verre jusque dans la région médiane du ruban, et est équipée, au voisinage de la paroi latérale du four, d'une couche d'isolation thermique formée d'une manchette capable de coulisser le long de cette tubulure de refroidissement, est caractérisé en ce que :

- la tubulure de refroidissement est portée par un chariot à l'extérieur du four ;
- la manchette sort comme elle à travers la paroi latérale du four et est montée de façon étanche à l'extérieur de ce dernier, d'une part sur ladite paroi latérale et d'autre part sur ladite tubulure ;
- la position de la tubulure de refroidissement d'une part, et la position de la manchette d'autre part, peuvent être réglées indépendamment l'une de l'autre, la tubulure de refroidissement pouvant coulisser dans un joint annulaire et la manchette pouvant coulisser dans un joint annulaire d'étanchéité qui la relie à la paroi latérale ;
- l'extrémité intérieure de la manchette coulissante se rétrécit progressivement vers l'intérieur du four.

L'invention permet désormais d'intervenir de manière efficace sur le profil de température transversal au ruban de verre, en cours même de fabrication, pour régler le processus. Lorsqu'il faut faire coulisser une manchette isolante, il suffit de défaire pendant un court moment les deux joints d'étanchéité qui relient la manchette d'une part à la paroi latérale et d'autre part à la tubulure de refroidissement, de faire coulisser la manchette jusqu'à la nouvelle position désirée, et de remonter les joints d'étanchéité, ce qui peut sans difficulté se faire en cours de fabrication.

Comme ces refroidisseurs peuvent eux-mêmes être déplacés longitudinalement, par exemple pour modifier la largeur de la zone sur laquelle les extrémités de deux appareils opposés interfèrent, il est particulièrement avantageux que l'emplacement de la couche isolante ne se modifie pas de ce fait, mais puisse au contraire rester tout à fait indépendant du réglage en question.

Par ailleurs, le fait que la manchette coulissante possède, à l'intérieur du four, une extrémité dont la section se rétrécit progressivement, procure une transition entre la zone de refroidissement et la zone isolée du refroidisseur, et évite les défauts qu'un changement brutal provoquerait sur le ruban de verre.

Dans une version particulièrement avantageuse de l'invention, la manchette coulissante comprend une gaine métallique maintenue à distance de la tubulure de refroidissement, enfermant une couche de fibres isolantes minérales disposée entre ce tube et la gaine métallique.

Dans un tel cas et selon un développement avantageux, on prévoit à l'intérieur une jupe maillée, constituée d'une grille ou treillis métallique rigide, et dont les dimensions internes sont légèrement supérieures aux dimensions externes de la tubulure de refroidissement. Une telle manchette coulisse facilement sur cette tubulure, sans que les dilatations liées aux températures élevées auxquelles sa paroi externe est soumise viennent l'en empêcher de façon notable.

Selon un autre développement de l'invention, la jupe maillée est maintenue à une certaine distance de la tubulure de refroidissement par des entretoises disposées de place en place.

D'autres détails et avantages de l'invention ressortiront de la description d'un exemple de mise en œuvre donné ci-dessous, en référence aux dessins. Ceux-ci montrent :

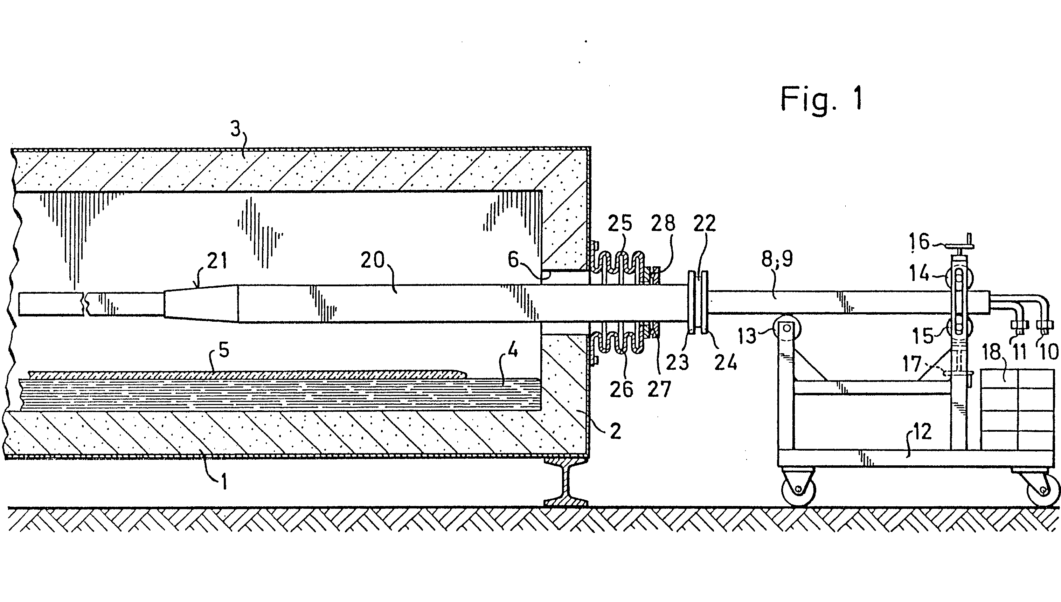

- figure 1 : une vue d'ensemble d'un refroidisseur selon l'invention,

- figure 2 : une vue perspective de la structure de la manchette du refroidisseur,

- figure 3 : une coupe longitudinale de la partie rétrécie à l'extrémité de la manchette.

A l'intérieur du four de flottage formé par la sole 1, les parois latérales 2 et le toît 3, se trouve un bain de métal fondu 4, tel que de l'étain, dont la température dépasse 1 000 °C à l'extrémité où le verre fondu est déversé, et se trouve voisine de 600 °C à l'extrémité opposée où le ruban de verre 5 est extrait du bain métallique.

Dans les parois latérales 2 sont prévus des ouvreaux 6 à travers lesquels sont introduits dans le four de flottage des refroidisseurs dont le nombre dépend des conditions de fabrication. Les dessins se limitent à la représentation de l'un d'entre eux.

Le tube de refroidissement est constitué de deux éléments rectangulaires 8 et 9 raccordés entre eux à l'extrémité qui se trouve à l'intérieur du four de flottage. Il est alimenté en eau froide par l'intermédiaire de raccords 10 et 11. Il repose sur un chariot 12 sur lequel il est maintenu par des rouleaux supports 13, 14 et 15. On peut modifier son inclinaison et par conséquent la distance entre l'extrémité active et la surface du verre en déplaçant les rouleaux 14 et 15 à l'aide de volants manuels 16 et 17.

Sur le double tube 8-9 est enfilée une manchette coulissante 20 dont l'extrémité intérieure 21 se rétrécit en tronc de pyramide. Cette manchette traverse l'ouvreau 6 de la paroi latérale 2 et se trouve raccordée de façon étanche à l'extérieur du four sur le double tube 8-9 à l'aide d'un joint annulaire 22 pincé entre deux flasques 23 et 24 vissés l'un contre l'autre et que leur serrage presse sur le tube. Pour assurer l'étanchéité entre la paroi latérale 2 et la manchette 20 est prévu un soufflet 25 dont l'extrémité porte deux flasques 26 et 27 enserrant un joint annulaire analogue 28 que leur serrage presse sur la manchette.

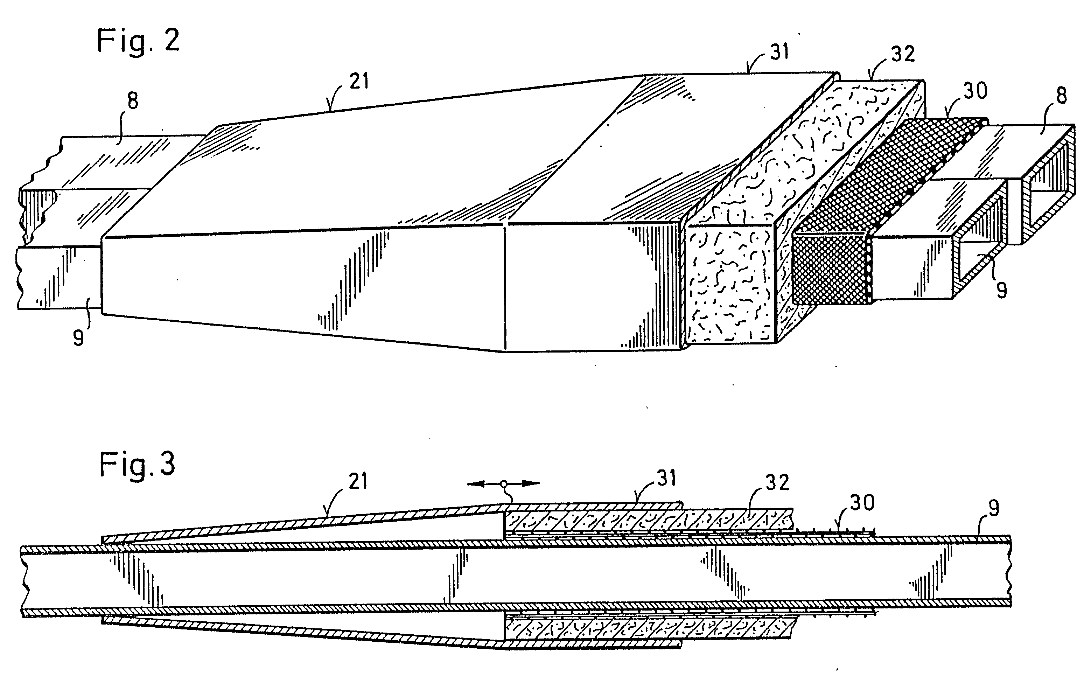

La structure de la manchette 20 apparaît sur les figures 2 et 3. Elle comprend une jupe intérieure 30 en treillis métallique : ce treillis métallique glisse bien sur le double tube 8-9, même à haute température, car il est suffisamment flexible pour se prêter aux dilatations que le dispositif subit sous l'action de la chaleur. La gaine extérieure 31 de la manchette 20 est constituée d'une tôle d'acier qui, à son extrémité intérieure 21, se rabat en tronc de pyramide sur le double tube 8-9, de sorte que la section se réduit progressivement. Entre elle et la jupe maillée 30 se trouve inséré un matelas isolant 32 constitué de fibres minérales.

En service, la gaine extérieure 31 est portée au rouge, à une température pratiquement égale à celle de l'ambiance, mais ceci pratiquement sans réchauffer le tube de refroidissement. Un autre avantage est que, la paroi extérieure se trouvant pratiquement à la température ambiante, les vapeurs du four ne s'y condensent pas, en scories créatrices de défauts à la surface du ruban lorsqu'elles se détachent et tombent sur le verre.

La manchette coulissante peut aussi être construite de façon à comprendre, en plus de la couche isolante constituée de fibres minérales, une couche isolante d'air. A cette fin, la jupe interne en treillis peut par exemple être placée à une certaine distance du tube refroidisseur, de façon à laisser un espace libre. La distance est alors, de préférence, maintenue par des entretoises disposées de place en place.

Pour régler le refroidissement, il suffit de desserrer les joints 22 et 27 puis, après glissement de la manchette 20 sur le double tube de refroidissement 8-9, de les resserrer dans leur nouvelle position.

Bien entendu, au lieu de ces joints et du soufflet 25, on peut utiliser d'autres organes d'étanchéité, dans la mesure où il est possible de les desserrer, puis de les remettre en place après réglage.

**Revendications**

1. Refroidisseur destiné à une installation de flottage du verre, constitué d'une tubulure (8 ; 9) qui pénètre dans le four de flottage à partir d'une seule paroi latérale, traversée par un fluide réfrigérant, qui s'étend transversalement au-dessus du ruban de verre (5) jusque dans la région médiane du ruban, et est équipée, au voisinage de la paroi latérale du four, d'une couche d'isolation thermique formée d'une manchette (20) capable de coulisser le long de cette tubulure de refroidissement (8 ; 9), caractérisé en ce que :

- la tubulure de refroidissement est portée par un chariot (12) à l'extérieur du four ;

- la manchette sort comme elle à travers la paroi latérale du four et est montée de façon étanche à l'extérieur de ce dernier, d'une part sur ladite paroi latérale (2) et d'autre part sur ladite tubulure ;

- la position de la tubulure de refroidissement (8 ; 9) d'une part, et la position de la manchette (20) d'autre part, peuvent être réglées indépendamment l'une de l'autre, la tubulure de refroidissement (8 ; 9) pouvant coulisser dans un joint annulaire (22) et la manchette (20) pouvant coulisser dans un joint annulaire d'étanchéité (28) qui la relie à la paroi latérale ;

- l'extrémité intérieure (21) de la manchette coulissante se rétrécit progressivement vers l'intérieur du four.

2. Refroidisseur selon la revendication 1, caractérisé en ce que la manchette coulissante comprend une gaine métallique (31) maintenue à distance de la tubulure de refroidissement, enfermant une couche de fibres isolantes minérales (32) disposée entre elle et la gaine métallique.

3. Refroidisseur selon la revendication 2, caractérisé en ce que la manchette coulissante possède une jupe intérieure maillée (30) constituée d'une grille ou treillis métallique rigide, dont les dimensions internes sont légèrement supérieures aux dimensions externes de la tubulure de refroidissement.

4. Refroidisseur selon la revendication 3, caractérisé en ce que la jupe maillée (30) est maintenue à une certaine distance de la tubulure de refroidissement par des entretoises disposées de place en place.

**Claims**

1. A cooling device intended for a float glass apparatus, comprising a duct (8, 9) through which a cooling fluid passes, the duct entering the float furnace from one side wall, and extending transversely above the glass ribbon (5) to the middle region of the ribbon, the duct being provided, in the neighbourhood of the side wall of the furnace, with a heat insulating layer comprising a sleeve (20) capable of sliding along the cooling duct (8, 9), characterised in that :

- the cooling duct is carried by a carriage (12) outside the furnace ;

- the sleeve extends from it through the side wall of the furnace and is mounted in a fluid-tight manner outside the latter, on the one hand on said side wall (2) and on the other hand on said duct ;

- the position of the cooling duct (8, 9) on the one hand, and the position of the sleeve (20) on the other hand, may be adjusted independently of each other, the cooling duct (8, 9) being capable of sliding in an annular joint (22) and the sleeve (20) being capable of sliding in a fluid-tight annular joint (28) connecting it to the side wall ;

- and the internal end (21) of the slidable sleeve narrowing progressively towards the furnace interior.

2. A cooling device according to claim 1, characterised in that the slidable sleeve comprises a metal sheath (31) held at a distance from the cooling duct, enclosing a layer of insulating mineral fibres (32) arranged between the duct and the metal sheath.

3. A cooling device according to claim 2, characterised in that the slidable sleeve has an interior mesh skirt (30) comprising a rigid metal grill or trellis of which the interior dimensions are slightly greater than the exterior dimensions of the cooling duct.

4. A cooling device according to claim 3, characterised in that the mesh skirt (30) is held at a certain distance from the cooling duct by spacers placed at intervals.

**Patentansprüche**

1. Kühler für eine Floatglasanlage aus einem Rohr (8 ; 9), das von einer Seitenwand her in den Floatglasofen hineinragt, von einer Kühlflüssigkeit durchströmt wird, sich quer oberhalb des Glasbandes (5) bis in den mittleren Bereich des Glasbandes erstreckt und in der Nähe der Seitenwand des Floatglasofens mit einer aus einer längs des Kühlrohres (8 ; 9) verschiebbaren Manschette (20) bestehenden Isolationsschicht versehen ist, dadurch gekennzeichnet, daß :

- das Kühlrohr außerhalb des Ofens von einem Wagen (12) getragen wird ;

- die Manschette als solche durch die Seitenwand aus dem Ofen herausgeführt und außerhalb des Ofens einerseits gegen die Seitenwand (2) und andererseits gegen das Kühlrohr abgedichtet ist ;

- die Stellung des Kühlrohres (8 ; 9) einerseits und die Stellung der Manschette (20) andererseits unabhängig voneinander regelbar sind, wobei das Kühlrohr (8 ; 9) in einer ringförmigen Dichtung (22), und die Manschette (20) in einer die Manschette mit der Seitenwand verbindenden ringförmigen Dichtung (28) verschiebbar sind, und

- der innere Endbereich (21) der verschiebbaren Manschette sich zum Ofeninnern hin fortschreitend verjüngt.

2. Kühler nach Anspruch 1, dadurch gekennzeichnet, daß die verschiebbare Manschette einen auf Abstand von dem Kühlrohr gehaltenen metallischen Mantel (31) umfaßt, der eine zwischen dem Kühlrohr und dem metallischen Mantel angeordnete Schicht aus mineralischen Isolierfasern (32) umschließt.

3. Kühler nach Anspruch 2, dadurch gekennzeichnet, daß die verschiebbare Manschette einen inneren maschenartigen Mantel (30) aus einem starren Drahtgitter oder Drahtnetz besitzt, dessen innere Abmessungen geringfügig größer als die äußeren Abmessungen des Kühlrohres sind.

4. Kühler nach Anspruch 3, dadurch gekenn-

7 **0 035 941** 8

zeichnet, daß der maschenartige Mantel (30) durch in Abständen angeordnete Distanzstücke in einem bestimmten Abstand von dem Kühlrohr gehalten wird.

Fig. 1

Fig. 2

Fig. 3

0 035 941